# EUROPÄISCHE PATENTSCHRIFT

(11) **EP 0 568 942 B1**
(45) Veröffentlichungstag und Bekanntmachung des Hinweises auf die Patenterteilung: **04.03.1998**
(21) Anmeldenummer: 93107091.6
(22) Anmeldetag: 30.04.1993
(51) Int. Cl.: H04B 1/44

(54) **Sende-Empfangsumschalter für TDMA-Funkgeräte**
Transmit-receive switch for TDMA-transceivers
Commutation émission-réception pour émetteurs-récepteurs à accès multiple et à division de temps

(30) Priorität: 05.05.1992 DE 4214859
(43) Veröffentlichungstag der Anmeldung: 10.11.1993
(73) Patentinhaber: SIEMENS AKTIENGESELLSCHAFT, 80333 München (DE)
(72) Erfinder: Molière, Thomas, Dipl.-Ing., W-8000 München 40 (DE)

(56) Entgegenhaltungen:
- EP-A- 0 355 973
- WO-A-92/00634
- PATENT ABSTRACTS OF JAPAN vol. 015, no. 514 (E-1150)27. Dezember 1991 & JP-A-32 26 124

## Beschreibung

Die Erfindung bezieht sich auf einen Sende-Empfangsumschalter für TDMA-Funkgeräte mit einer Antennenumschaltung auf zwei Antennen.

Auf der Antennenseite eines Funkgerätes ist bisher zur Umschaltung von einer internen auf eine externe Antenne ein Antennenumschalter vorgesehen, der beispielsweise aus einem Relais oder einem Halbleiterschalter besteht. Sende- und Empfangssignal werden entweder über ein Duplexfilter voneinander getrennt oder über Einzelfilter im Sende- und Empfangsweg, die über einen Sende-Empfangsumschalter wechselweise an den Antennenumschalter angeschaltet werden. Entsprechend der Ausgestaltung addieren sich dabei die Durchgangsdämpfungen des Duplexfilters und des Antennenumschalters oder der Einzelfilter und der Serienschaltung aus Sende-Empfangsumschalter und Antennenumschalter. Insgesamt führt dies zu einer deutlichen Verschlechterung der Empfängerempfindlichkeit und der Ausgangsleistung bzw. zu einer Erhöhung der Batteriestromaufnahme.

Zur Behebung dieser Probleme kann man beispielsweise verlustarme, aber voluminöse Filter und Relais verwenden oder die Empfängerempfindlichkeit und Sendeausgangsleistung den erhöhten Durchgangsdämpfungen anpassen. Dies bedeutet jedoch eine Erhöhung des Aufwandes, die bei Handfunkgeräten nicht mehr vertretbar ist.

Der Erfindung liegt die Aufgabe zugrunde, zur Lösung des vorstehend geschilderten Problems eine Schalteinrichtung einfachen Aufbaus zu schaffen.

Diese Aufgabe wird gemäß der Erfindung gelöst durch einen im Verbindungsweg des Senders und des Empfängers zu den beiden Antennen liegenden, von einem TDMA-Schaltsignal angesteuerten doppelten TDMA-Schalter, der bei der betreffenden Schalterstellung eines zur Antennenumschaltung vorgesehenen Antennenumschalters entsprechend dem anliegenden TDMA-Schaltsignal wechselweise eine Verbindung vom Sender bzw. Empfänger des Funkgerätes zu der jeweils angeschalteten Antenne herstellt.

Der schnelle TDMA-Schalter als Sende-Empfangsumschalter ist dabei so ausgelegt, daß er ohne Erhöhung der Zahl dämpfender Schaltelemente in der Lage ist, auf zwei verschiedene Antennen umzuschalten. Da nur im Sende- bzw. Empfangsfall Strom fließt, arbeitet die Schaltung sehr stromsparend.

Vorteilhafte Ausgestaltungen und Weiterbildungen des Erfindungsgegenstandes sind in den Unteransprüchen angegeben.

Nachstehehend wird die Erfindung anhand von in der Zeichnung dargestellten Ausführungsbeispielen näher erläutert.

Es zeigen:
- Figur 1: eine Ausführungsform mit einem doppelten TDMA-Schalter (schneller Halbleiterschalter) in schematischer Darstellung und
- Figur 2: eine schematische Darstellung des Halbleiterschalters mit PIN-Dioden.

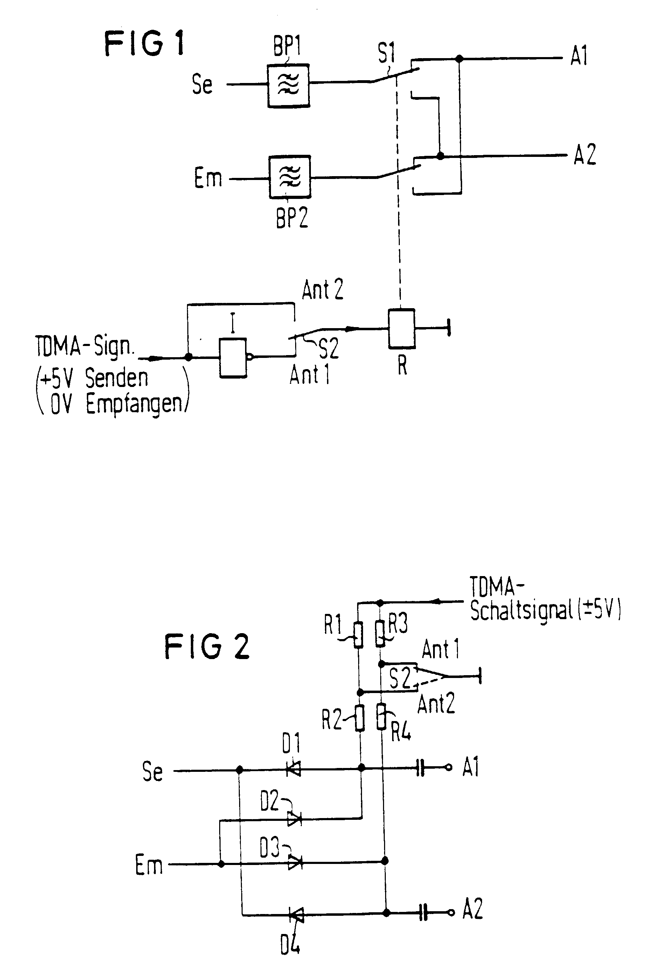

Beim Ausführungsbeispiel nach Figur 1 ist im Signalweg des Senders ein Filter BP1 und im Signalweg des Empfängers ein Filter BP2 angeordnet. Sender und Empfänger sind über einen doppelten TDMA-Schalter S1 an die Antennen 1 und 2 anschaltbar. Es handelt sich hierbei um eine schematische Darstellung des Schalters, um den Schaltvorgang zu erläutern. Der TDMA-Schalter S1 wird von einem TDMA-Signal über ein Relais R angesteuert. Dabei ist im Weg des TDMA-Si-gnals ein weiterer Schalter 52 angeordnet, der als Wechselschalter ausgebildet ist und in seinen beiden Schaltstellungen den Anschluß der Antenne 1 oder der Antenne 2 bewirkt. Im Verbindungsweg der Schalterstellung für Antenne 1 ist ein invertierendes Schaltelement I eingeschaltet, das eine Umkehrung des TDMA-Signals, z.B. +5 V beim Senden und 0 V beim Empfangen, bewirkt. Diese Schalterstellung ist in Figur 1 gezeigt. In der zweiten Schalterstellung für die Anschaltung von Antenne 2 wird das TDMA-Signal dem Relais R direkt zugeführt.

Nachstehend wird die Funktionsweise der Schaltung näher erläutert: In der gezeigten Stellung des Antennenumschalters S2 arbeitet das Funkgerät auf der Antenne 1. Dies bedeutet, daß das TDMA-Signal von +5 V beim Senden im invertierenden Element I den Zustand 0 V erhält, so daß der TDMA-Schalter S1 in der gezeigten Ruhestellung verbleibt und der Sender an der Antenne 1 liegt. Das TDMA-Signal von 0 V für den Empfangsfall wird am invertierenden Element I in ein positives Signal umgewandelt, der TDMA-Schalter S1 gelangt über das Relais R in seine Arbeitsstellung, so daß der Empfänger mit der Antenne 1 verbunden wird.

In der Schalterstellung des Antennenumschalters S2 für Antenne 2 gelangt das TDMA-Signal direkt zum Relais R. Im Sendefall bewirkt das TDMA-Signal von +5 V ein Ansprechen des Relais R und damit eine Umschaltung des TDMA-Schalters S1 von der gezeigten Ruhestellung in die Arbeitsstellung, wodurch der Sender an die Antenne 2 angeschaltet wird. Im Empfangsfall weist das TDMA-Signal den Wert 0 V auf, d.h. der TDMA-Schalter S1 verbleibt in der Ruhestellung, so daß der Empfänger mit der Antenne 2 verbunden ist.

Figur 2 zeigt in schematischer Darstellung einen Halbleiterschalter als Sende-Empfangs-Umschalter, bei dem im Verbindungsweg von Sender und Empfänger zu den Antennen 1 und 2 jeweils eine Diode D1, D2, D3, D4 eingeschaltet ist. Dies können beispielsweise PIN-Dioden sein, die über ein TDMA-Schaltsignal von ±5 V geschaltet werden. Dabei ist die Diode D1 im Verbindungsweg vom Sender zur Antenne 1 und die Diode D2 im Verbindungsweg vom Empfänger zur Antenne 1 eingefügt. Diode D3 liegt im Verbindungsweg vom Empfänger zur Antenne 2, Diode D4 im Verbindungsweg vom Sender zur Antenne 2. Die Zuführung des TDMA-Schaltsignals erfolgt über jeweils einen ohmschen Spannungsteiler R1, R2 und R3, R4, wobei die Verbindungspunkte der Widerstände R1 und R2 sowie R3 und R4 mit jeweils einem Anschlußkontakt des mit seinem Mittenkontakt auf Masse liegenden Antennenumschalters 52 verbunden sind. Der zweite Anschluß des Widerstandes R2 ist mit dem Verbindungspunkt der beiden Dioden D1 und D2 und der Antenne 1 verbunden, der zweite Anschluß des Widerstandes R4 mit dem Verbindungspunkt der Dioden D3 und D4 und der Antenne 2.

Die Funktion dieses Sende-Empfangs-Umschalters ist folgende: Für den in Figur 2 dargestellten Fall, daß Sender und Empfänger an Antenne 1 geschaltet sind, wird beim Anlegen eines TDMA-Schaltsignals von +5 V die Diode D1 durchgeschaltet, so daß der Sender an der Antenne 1 anliegt. Für den Empfangsfall wird ein TDMA-Schaltsignal von -5 V angelegt. Dadurch wird die Ciode D2 durchgeschaltet und der Empfänger liegt an der Antenne 1.

Bei Umschaltung des Antennenumschalters 52 (strichlierte Darstellung) wird beim Anlegen des TDMA-Schaltsignals von +5 V die Diode D4 durchgeschaltet, so daß der Sender an der Antenne 2 anliegt. Im Empfangsfall wird ein TDMA-Schaltsignal von -5 V angelegt, wodurch die Diode D3 durchgeschaltet wird und damit der Empfänger auf die Antenne 2 geschaltet ist. Da der Diodenstrom nur im Sende- und Empfangsfall zu fließen braucht, ist diese Schaltung sehr stromsparend.

## Patentansprüche

1. Sende-Empfangsumschalter für TDMA-Funkgeräte mit einer Antennenumschaltung auf zwei Antennen (A1,A2), **gekennzeichnet** durch einen im Verbindungsweg des Senders (Se) und des Empfängers (Em) zu den beiden Antennen (A1,A2) liegenden, von einem TDMA-Schaltsignal angesteuerten doppelten TDMA-Schalter (S1), der bei der betreffenden Schalterstellung eines zur Antennenumschaltung vorgesehenen Antennenwahlumschalters (S2) entsprechend dem anliegenden TDMA-Schaltsignal wechselweise eine Verbindung vom Sender und Empfänger des Funkgerätes zu der jeweils angeschalteten Antenne (A1,A2) herstellt.

2. Sende-Empfangsumschalter nach Anspruch 1, **dadurch gekennzeichnet,** daß bei dem verwendeten doppelten TDMA-Schalter (S1) jeweils nur ein Einfügungsdämpfung verursachendes Schaltelement zwischen der angewählten Antenne (A1,A2) und dem Sendeausgang (SE) oder Empfängereingang (Em) liegt.

3. Sende-Empfangsumschalter nach Anspruch 1 oder 2, **dadurch gekennzeichnet**, daß der doppelte TDMA-Schalter als schneller Halbleiterschalter realisiert ist mit Halbleiterelementen im Verbindungsweg von Sender und Empfänger zur der jeweiligen Antenne, wobei das betreffende, für Sende- oder Empfangsbetrieb vorgesehene Schaltsignal, die Halbleiterelemente ansteuert und durchschaltet.

4. Sende-Empfangsumschalter nach Anspruch 3, **dadurch gekennzeichnet**, daß die Halbleiterelemente aus PIN-Dioden (D1,D2,D3,D4) bestehen.

5. Sende-Empfangsumschalter nach Anspruch 1 oder 2, **dadurch gekennzeichnet,** daß der doppelte TDMA-Schalter (S1) im Verbindungsweg zwischen Sender (SE) bzw. Empfänger (Em) des Funkgerätes und den Antennen (A1,A2) aus den Schaltkontakten eines Relais (R) besteht, das über einen im Zuführungsweg der Schaltsignale liegenden Antennenwahlschalter (S2) von den Schaltsignalen in der Weise angesteuert ist, daß die Schaltsignale in der einen Schaltetstellung des Antennenwahlschalters dem Relais (R) direkt und in der anderen Schalterstellung über einen Inverter (3) zugeführt sind.

## Claims

1. Transmit/receive change-over switch for TDMA radio sets, having antenna switch-over to two antennas (A1, A2), characterized by a double TDMA switch (S1) which lies in the connection path from the transmitter (Se) and from the receiver (Em) to the two antennas (Al, A2), is driven by a TDMA switching signal and, for the relevant switching state of an antenna select change-over switch (52) intended for antenna switch-over, alternately makes a connection from the transmitter and receiver of the radio set to the respectively connected antenna (A1, A2), in accordance with the applied TDMA switching signal.

2. Transmit/receive change-over switch according to Claim 1, characterized in that, for the double TDMA switch (S1) which is used, there is in each case only one switching element which causes insertion loss between the selected antenna (A1, A2) and the transmitter output (Se) or receiver input (Em).

3. Transmit/receive change-over switch according to Claim 1 or 2, characterized in that the double TDMA switch is produced in the form of a fast semiconductor switch, with semiconductor elements in the connection path from the transmitter and receiver to the respective antenna, the relevant switching signal, provided for transmit or receive operation, driving and switching through the semiconductor elements.

4. Transmit/receive change-over switch according to Claim 3, characterized in that the semiconductor elements consist of PIN diodes (D1, D2, D3, D4).

5. Transmit/receive change-over switch according to Claim 1 or 2, characterized in that the double TDMA switch (S1) in the connection path between the transmitter (Se), or the receiver (Em), of the radio set and the antennas (A1, A2) consists of the switching contacts of a relay (R) which is driven by the switching signals, by means of an antenna select switch (S2) lying in the feed path of the switching signals, in such a way that the switching signals are fed to the relay (R) directly, for one of the switching states of the antenna select switch, and via an inverter (3) for the other switching state.

## Revendications

1. Commutateur d'émission-réception pour des appareils de radiocommunication AMRT à commutation d'antenne sur deux antennes (A1, A2), caractérisé par un double commutateur (S1) AMRT qui se trouve dans la voie de liaison de l'émetteur (Se) et du récepteur (Em) avec les deux antennes (A1, A2), qui est commandé par un signal de connexion AMRT et qui, en la position de commutation concernée d'un commutateur (S2) de choix d'antenne prévu pour la commutation d'antenne, produit, suivant le signal de connexion AMRT qui est présent, alternativement une liaison de l'émetteur et du récepteur de l'appareil de radiocommunication à l'antenne A1, A2 raccordée associée.

2. Commutateur d'émission-réception suivant la revendication 1, caractérisé en ce que, pour le double commutateur (S1) AMRT utilisé, il n'est présent chaque fois entre l'antenne (A1, A2) sélectionné et la sortie (Se) d'émission ou l'entrée (Em) de réception qu'un seul élément de connexion provoquant un affaiblissement dû à l'insertion.

3. Commutateur d'émission-réception suivant la revendication 1 ou 2, caractérisé en ce que le double commutateur AMRT est réalisé en commutateur à semi-conducteurs rapide comportant des éléments à semi-conducteurs dans la voie de liaison de l'émetteur et du récepteur avec chacune des antennes, le signal de connexion concerné, prévu pour le fonctionnement en émission ou pour le fonctionnement en réception, commandant et interconnectant les éléments à semi-conducteurs.

4. Commutateur d'émission-réception suivant la revendication 3, caractérisé en ce que les éléments à semi-conducteurs sont des diodes (D1, D2, D3, D4) PIN.

5. Commutateur d'émission-réception suivant la revendication 1 ou 2, caractérisé en ce que le double commutateur (S1) AMRT est constitué, dans la voie de liaison entre l'émetteur (Se) et le récepteur (Em) de l'appareil de radiocommunication et les antennes (A1, A2), des contacts de connexion d'un relais (R) qui, par l'intermédiaire d'un commutateur (S2) de sélection d'antenne se trouvant dans la voie d'envoi des signaux de connexion, est commandé par les signaux de connexion de telle manière que les signaux de connexion sont, en l'une des positions du commutateur de sélection d'antenne, envoyés directement au relais (R) et, en l'autre position du commutateur, envoyés au relais (R) par l'intermédiaire d'un inverseur (I).
